# EUROPEAN PATENT SPECIFICATION

(11) **EP 2 898 399 B1**
(45) Date of publication and mention of the grant of the patent: **06.11.2019**
(21) Application number: 13839599.1
(22) Date of filing: 18.09.2013
(51) Int. Cl.: G06F 3/046, G06F 3/042, G06F 3/03

(54) **DISPLAY INTEGRATED CAMERA ARRAY**
IN EIN DISPLAY INTEGRIERTE KAMERAANORDNUNG
ENSEMBLE DE CAMÉRAS INTÉGRÉES DANS UN AFFICHEUR

(30) Priority: 21.09.2012 US 201213624378
(43) Date of publication of application: 29.07.2015
(73) Proprietor: Amazon Technologies, Inc., Reno, NV 89507 (US)
(72) Inventor: BALDWIN, Leo, B., Seattle, Washington 98107 (US); KARAKOTSIOS, Kenneth, M., Seattle, Washington 98107 (US); MOSCOVICH, Tomer, Seattle, Washington 98107 (US); NOBLE, Isaac, S., Seattle, Washington 98107 (US)
(74) Representative: J A Kemp LLP
(86) International application number: PCT/US2013/060457
(87) International publication number: WO 2014/047207

(56) References cited:
- US-A1- 2008 122 792
- US-A1- 2008 122 792
- US-A1- 2008 259 051
- US-A1- 2010 060 611
- US-A1- 2010 164 891
- US-A1- 2010 164 891
- US-A1- 2010 164 906
- US-A1- 2010 177 060
- US-A1- 2012 032 926

## Description

As computing devices offer increased processing capacity and functionality, users are able to provide input in an expanding variety of ways. For example, a user might be able to control a computing device by performing a motion or gesture at a distance from the computing device, where that gesture is performed using a hand or finger of the user. For certain devices, the gesture is determined using images captured by a camera that is able to view the user, enabling the device to determine motion performed by that user. In some cases, however, at least a portion of the user will not be within the field of view of the camera, which can prevent the device from successfully determining the motion or gesture being performed. While capacitive touch approaches can sense the presence of a finger very close to a touch screen of the device, there is still a large dead zone outside the field of view of the camera that prevents the location or movement of a finger of the user from being determined.

US 2008/0122792 A1 discloses a touch panel arranged to enable communication using infrared signals with nearby devices.

US 2010/0177060 A1 discloses a display system which includes a touch-sensitive systems and photo-sensitive sensing system.

US 2008/259051 A1 discloses a display device, comprising a backlight that emits a plurality of light-source lights thus providing a source of illumination for causing light to be reflected from an object through a display screen and a detector array including a plurality of detectors configured to detect light that is reflected by the object and passes through the display screen. It further discloses that the plurality of light-source lights are activated to emit light at different specified times, that data for the light detected by the detector array is analysed to determine a position of the object with respect to the display device. It also discloses that intensity data captured by the detector array for each of the specified times is collected, that a combined data set including the intensity data for each of the specified times is generated and that the representation of the object in the combined data set is analysed to further determine a position of the object with respect to the display device.

US 2012/032926 A1 discloses a computing device, comprising a plurality of illumination sources including infrared-emitting units and a backlight, operable to provide a source of illumination for causing light to be reflected from an object through the display screen, a detector array including a plurality of detectors configured to detect light that is reflected by the object and passes through the display screen. It further discloses the activation of a first subset (infrared-emitting units) and of a second subset (backlight) of the illumination sources to emit light at two different specified times from two different directions. Data for the light detected by the detector array is analysed to determine a position of the object with respect to the computing device.

According to the present invention, there are provided a computing device and a computer-implemented method as defined in the appended claims.

Various embodiments in accordance with the present disclosure will be described with reference to the drawings, in which:
**FIGS. 1** illustrates an example situation wherein a user is interacting with a computing device in accordance with various embodiments;
**FIGS. 2(a), 2(b),** and **2(c)** illustrate views of an example camera array that can be utilized in accordance with various embodiments;
**FIGS. 3(a), 3(b), 3(c), 3(d), 3(e),** and **3(f)** illustrate example images that can be captured using a camera array in accordance with various embodiments;
**FIGS. 4(a)** and **4(b)** illustrate portions of an example process for operating a camera array in accordance with various embodiments;
**FIGS. 5(a), 5(b), 5(c),** and **5(d)** illustrate example approaches to determining feature location using a combination of camera elements that can be utilized in accordance with various embodiments;
**FIG. 6** illustrates an example device that can be utilized in accordance with various embodiments;
**FIG. 7** illustrates an example set of components that can be utilized in a device such as that illustrated in **FIG. 6****;** and
**FIG. 8** illustrates an example an environment in which various embodiments can be implemented.

### DETAILED DESCRIPTION

Systems and methods in accordance with various embodiments of the present disclosure may overcome one or more of the aforementioned and other deficiencies experienced in conventional approaches to providing input to an electronic device. In particular, approaches discussed herein utilize a combination of camera elements to capture images and/or video of a feature of a user (or object being held by the user, etc.) for purposes of determining motions, gestures, or other such actions performed by the user. In at least some embodiments, one or more conventional cameras can be used to capture images of a feature of a user, such as a user's fingertip, or an object held by the user, while the feature (or object) is in a field of view of at least one camera of the device. The device also can include a relatively low-resolution camera array, which can be integrated with, or positioned proximate to, a display screen (or other at least semi-transparent element) of the device, such that the elements of the array can capture light (e.g., ambient or IR) passing through the display screen.

In at least some embodiments, each element of the array is a separate light or radiation detector, such as a photodiode. The individual detectors can be positioned "behind" the display screen in at least some embodiments, and in some embodiments can be positioned behind an IR-transmissive sheet or other such element capable of preventing ambient light from being detected by the elements, enabling the camera array to operate even when the display screen is actively displaying content. One or more illumination elements can be configured to transmit light to be reflected from a nearby object and detected by the array. Since the detectors do not have lenses in at least some embodiments, the array will only be able to capture discernible images over a range of distance from the array. The emitters can emit IR that can pass through the IR transmissive sheet and enable determination of location of an object near the screen independent of operation of the screen. In at least some embodiments images can be captured with different directions of illumination from different IR emitters, in order to obtain depth information useful in determining an orientation or other aspect of the feature being detected.

Many other alternatives and variations are described and suggested below in relation to at least some of the various embodiments.

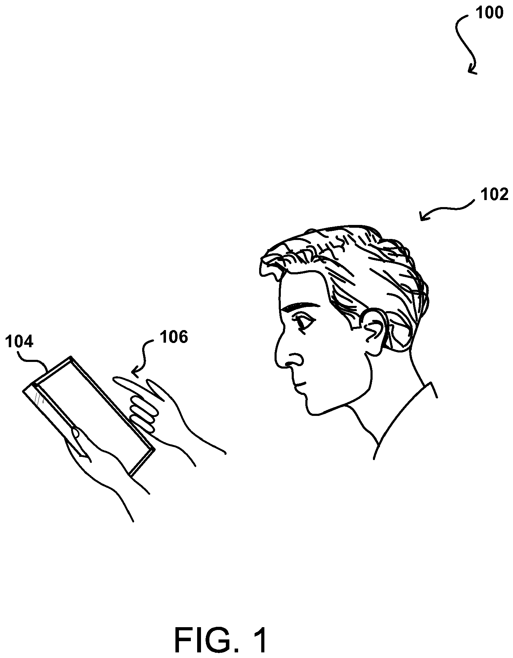

**FIG. 1** illustrates an example environment **100** in which aspects of various embodiments can be implemented. In this example, a user **102** is attempting to provide gesture input to a computing device **104** using the user's finger **106.** Although a portable computing device (*e.g.*, an electronic book reader, smart phone, or tablet computer) is shown, it should be understood that any electronic device capable of receiving, determining, and/or processing input can be used in accordance with various embodiments discussed herein, where the devices can include, for example, desktop computers, notebook computers, personal data assistants, video gaming consoles, television set top boxes, smart televisions, and portable media players, among others.

In this example, the computing device **104** can include one or more cameras **108** configured to capture image information including a view of the user's finger **106,** which can be analyzed by an application executing on the computing device to determine a relative location of the finger with respect to the computing device **104.** The image information can be still image or video information captured using ambient or infrared light, among other such options. Further, any appropriate number of cameras of the same or different types can be used within the scope of the various embodiments. The application can determine the position of the finger (or another such object), and can track the position of the finger over time by analyzing the captured image information, in order to allow for motion and/or gesture input to the device. For example, the user can move the finger up and down to adjust a volume, move the finger in a plane to control a virtual cursor, and the like.

Relying on camera information can have certain drawbacks, however, as each camera will generally have a limited field of view, even for wide angle lenses (*i.e.,* with a capture angle on the order of about 120 degrees, for example). Even fisheye or other wide-angle lenses have limited fields of view, or at least provide somewhat distorted images near an edge of a field of view. Accordingly, there will generally be one or more dead zones around the computing device where an object might fall outside the field of view of any of the cameras. Until the fingertip enters the field of view of at least one camera, the device cannot locate the fingertip in images captured from any of the cameras, and thus cannot determine or track motion of the feature.

Approaches in accordance with various embodiments can account for at least some of the dead zone between and/or outside the field of view of one or more cameras on a computing device by utilizing a camera array (or sensor array) positioned to capture light (e.g., ambient or IR) passing through a display screen or other such element of the device. The camera array can be integrated with, or otherwise positioned with respect to, a display element in accordance with various embodiments. In devices with multiple display elements, there might be multiple camera arrays utilized to detect motions, gestures, hovers, or other actions near those elements that might be outside the field of view of at least one conventional camera on the device.

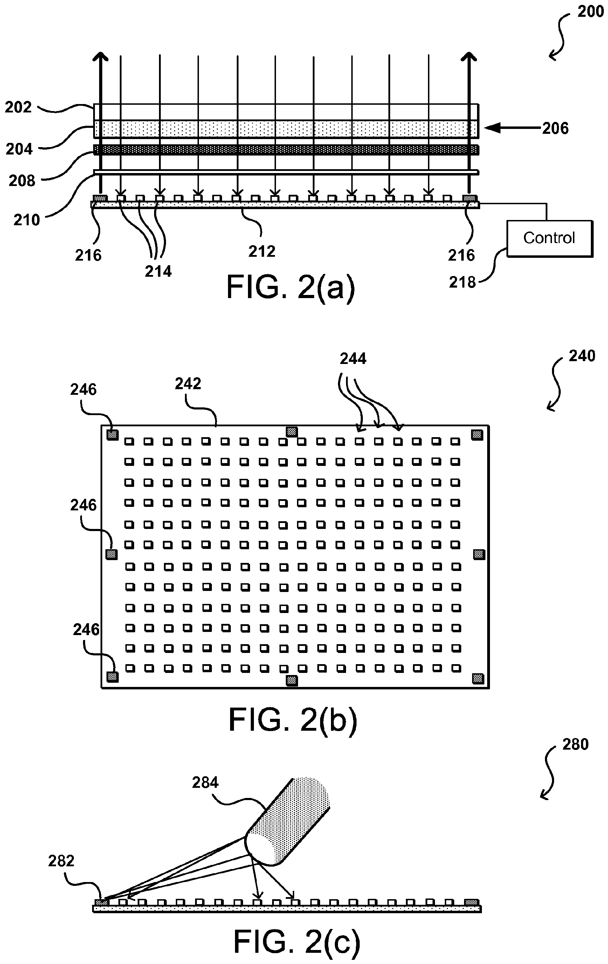

**FIG. 2(a)** illustrates a cross-sectional view **200** of an example camera array that can be utilized in accordance with various embodiments. In this example the array is positioned "behind" a display screen, which can include at least display layer **202** that can be at least semi-transparent, based at least in part upon the type of display screen (*e.g.,* LCD or OLED). Depending on the type of display, various other layers and components can be utilized as well as known or used for such purposes. For example, an LCD display might include a backlight layer **204** for receiving and directing light **206** (from a source on the device such as at least one LED) through the display layer **202** in order to generate an image on the display screen. The camera array in this example includes an array of detectors **214,** such as photodiodes, positioned on a printed circuit board (PCB), flex circuit, or other such (substantially flat or planar) substrate **212,** with the detectors positioned on the side towards the display screen in order to be able to capture light incident on, and passing through, the display layer **202** from outside the computing device. It should be understood, however, that various types of single- or multi-value light or radiation sensors could be used as well within the scope of the various embodiments. Further, other layers of the display can function as a substrate, or support for various emitters and/or detectors, such that a separate substrate layer is not used in some embodiments. In displays with a backlight layer **206,** the detectors can be positioned "behind" the backlight layer **206** with respect to the display layer **202,** as the circuitry, lines, and/or other components on (or in) the substrate **212** generally will not be transparent in at least some embodiments, for factors that may include complexity and cost, among others.

In this example, the detectors **214** are positioned at regular intervals in two dimensions, spaced a relatively fixed amount apart, although other configurations can be used as well. The spacing can be determined based at least in part upon the size of each detector, the size of the display screen, and/or the desired resolution of the camera array, among other such factors. In at least some embodiments none of the detectors will contain a focusing lens, such that the camera array will effectively function as a near-field camera. The lack of lenses can cause each detector to directly sense light returned from the finger, which in at least some embodiments can only be discerned for fingers or other objects within a relatively short distance from the screen, such as within a range of less than one or two inches. Anything beyond that range may be too blurry to be decipherable, but since the dead zone for conventional camera configurations can be on the order of about two inches from the display screen or less, such range can be sufficient to at least determine the approximate location of a feature within the dead zone.

Such an approach has advantages, as the lack of lenses allows the camera array to be relatively thin, which can be desirable for devices with limited space such as portable computing devices. Further, the array can be relatively inexpensive, and does not require optical alignment that might otherwise be required when including lenses with the array. Since the distance that the camera array is intended to cover is relatively close to the device, such as in the camera dead zone as discussed above, there may be little advantage to adding lenses when the position of the fingertip (or another such object) can be determined without such lenses.

In some embodiments, such as for OLED displays that are substantially transparent, the detectors can capture ambient (or other) light passing through the display layer. For display devices such as LCD displays, however, the detectors might need to be timed to capture images between refresh times of the display, in order to prevent the detectors from being saturated, or at least the captured image data from being dominated or contaminated by the light from the image being rendered on the display screen. At least some display screen assemblies include an at least partially opaque backplane layer **208,** which can prevent light from being directed into the device and/or cause the display screen to appear black (or another appropriate color) when the display is not displaying content. If a backplane layer **208** is used with the display screen, the detectors might be positioned to capture light passing through holes or openings in the backplane, or the detectors might be at least partially passed through the backplane layer, among other such options.

In the example of **FIG. 2(a)****,** the detectors are configured to capture (at least) infrared (IR) light passing through the display layer **202.** In at least some embodiments, one or more IR emitters **216** (*e.g.,* IR LEDs) can be positioned on the device to cause IR light to be emitted, which can be reflected by any object in the dead zone such that at least a portion of the reflected IR light can be detected by the photodiodes **214.** While any appropriate number of IR emitters can be positioned at any appropriate location on the device, in this example there are multiple emitters **216** positioned on the substrate **212** so as to direct light "up" through the display layer (in the figure), with the reflected light being directed back "down" through the layer. It should be understood that directions such as "up" and "down" are used for ease of explanation and should not be interpreted as required directions unless otherwise stated for specific embodiments. Further, as mentioned, one or more emitters can be positioned away from the substrate in at least some embodiments, such as interspersed between the light sources for a backlight of the display, among other such options. The emitters and detectors can be controlled and/or operated using control circuitry **218** and/or components that can be positioned at an edge of the substrate **212,** for example, in order to time the emission of IR and the detection by the detectors. The control circuitry can include one or more processors for collecting and/or analyzing the collected image data from the detectors, or can pass the data on to at least one other processor (not shown) of the device. Discrete read-out circuitry can be used that can go through a row/column selection process do address each detector, as the limited number can enable a serial reading process to be performed relatively quickly, although in some approaches the reading can be performed at least partially in parallel.

As mentioned, a display screen might have a backplane **208** or other at least partially opaque layer (*e.g.,* a black piece of plastic or similar material) positioned "behind" the display layer **202.** In at least some embodiments, this layer might be substantially opaque over the visible spectrum, but might allow for transmission of at least a portion of the IR spectrum. Accordingly, the emitters **216** and detectors **214** can be positioned behind the backplane and configured to emit and capture IR, respectively, that passes through the backplane **208.** An advantage to being able to utilize IR passing through the backplane layer is that the detection can occur at any time, independent of the operation of the display screen. Further, ambient light incident on the device will not be able to interfere with the light detected by the detectors, such as where the detectors might not be dedicated IR detectors but might be able to capture light over a wide range of wavelengths, including the visible and IR spectrums. Further, such positioning of the camera array can prevent the array from being visible by a user when the display is not displaying content. For embodiments without a backplane or where the emitters and/or detectors are positioned at openings in the backplane, the emitters and detectors can be substantially black and surrounded by black components, but might still be at least somewhat visible to a user of the device. In some embodiments a diffuse surface can be positioned above the backplane in order to reduce the appearance of the detectors to a user of the device. In other embodiments, the detectors can be made to appear white by coating a lens of the detectors, such that the detectors do not appear as dark spots with respect to an otherwise white backlight in at least some embodiments.

In at least some embodiments the emitters also will not have lenses, such that the emitters can be relatively broad angle as well. In order to at least partially control the direction of light, a thin film waveguide layer **210** can be used that can be positioned between the display layer **202** and the emitters **216,** whether positioned on a display layer, as part of a backplane, or in another appropriate location. The thin film can have a plurality of channels or diffractive features configured to limit the emission angle for the emitters. Such an approach can further help to discriminate light reflected from different emitters. Other films might include light pipes or other features that can direct light toward the middle of the dead zone, beyond an edge of the display, etc. The ability to focus and direct the light can also help to increase the efficiency of the device.

**FIG. 2(b)** illustrates an example top view **240** of a portion of a camera array assembly that can be utilized in accordance with various embodiments. In this example, an array of photodiodes **244** is spaced at regular intervals (*e.g.*, on the order of about 1-2 millimeters apart) across a majority of the area of the flex circuit substrate **242,** which is comparable in size to that of the display screen by which the array will be positioned. It should be understood that the array can be positioned at one or more smaller regions of the substrate, can be positioned up to the edges, or can be otherwise arranged. Further, the spacing may be irregular or in a determined pattern, and there can be different numbers or densities of photodiodes as discussed elsewhere herein. In one example, there are on the order of thirty, forty, or eighty diodes in one or both directions, while in other examples there are hundreds to thousands of detectors in an array. As conventional cameras typically include millions of pixels, the camera array can be considered to be relatively low resolution. In this example there are a number of emitters **246** about an edge of the substrate **242.** It should be understood that any number of emitters (*e.g*., one or more IR LED's) can be used in various embodiments, and the emitters can be positioned at other appropriate locations, such as at the four corners of the substrate, interspersed between at least a portion of the detectors, etc. In some embodiments, placing the emitters about an edge of the substrate can allow for a relatively uniform illumination of a feature in the dead zone or otherwise sufficiently near the camera array. In embodiments including a backlight layer, the backlight can be segmented into regions that are activated in sequence. The detectors for a region can capture light when the corresponding region is not activated, such that the detectors of the region are not saturated.

At least some embodiments can take advantage of the spread arrangement of emitters to emit IR from different directions at different times, which can cause different portions of the feature to be illuminated at different times. Such information can be used to obtain depth, shape, and other such information that may not otherwise be obtainable with the near-field camera approach supported by the camera array. For example, consider the situation **280** of **FIG. 2(c)****.** Light from one or more emitters **282** on a side or corner of the substrate is activated, which causes a region of a finger **284** to be illuminated that is toward the direction of the activated emitter(s). As should be apparent from the figure, the region that is illuminated is different from the region that would be illuminated if an emitter **286** on the other side or another corner was emitting at the same time, or if the emitter **286** was emitting by itself. Further, the detectors receiving reflected light will be different for each direction. While features may not be able to be distinguished from a near-field image, the ability to illuminate different regions of an object in different images can allow additional information to be obtained about that object.

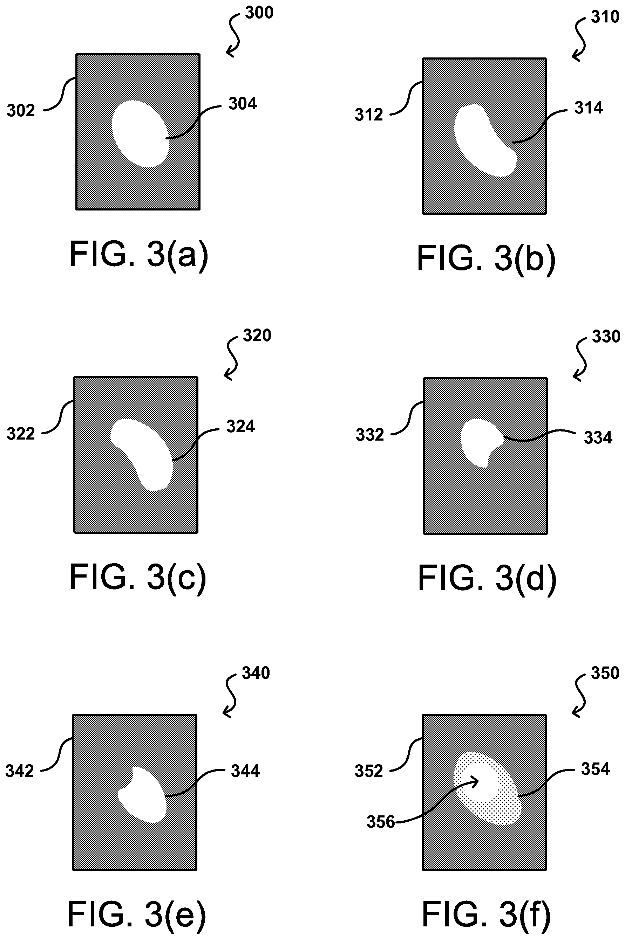

As an example, **FIG. 3(a)** illustrates a view **300** of an example image **302** that might be obtained when all the emitters are activated. As should be apparent in light of the present disclosure, such an image is generated by obtaining the information from each detector and assembling that information into a single image based at least in part upon the relative location of each detector. As illustrated, a region **304** of illumination is contained in the image, which corresponds to the location of an object near the camera array. While the region **304** can be useful in determining the relative location of the object, there is little additional information available due at least in part to the limitations of a near-field camera as discussed above. In the view **310** of **FIG. 3(b)****,** however, the image **312** illustrated shows a slightly different region **314** corresponding to the object, where only a portion of the object was illuminated with respect to the image of **FIG. 3(a)****,** as an emitter on a specified side or corner of the array was used to illuminate the object. The image in **FIG. 3(b)** can correspond to a situation where the illumination came from an emitter on the lower left corner of the display (based at least in part upon the figure orientation). Similarly, the views **320, 330, 340** of the object in **FIGS. 3(c), 3(d),** and **3(e)** illustrate regions **324, 334, 344** of the object that were illuminated by emitters on the upper right, upper left, and lower right of the array, respectively. As illustrated, even though each view contains little to no depth information, each view contains a slightly different shape representing the object, based at least in part upon the direction from which the object was illuminated. These images can be combined, whether through mapping and pixel value addition or another such process, to obtain an image **352** such as that illustrated in the view **350** of **FIG. 3(f)****.** In the image **352,** a bright central region **356** is illustrated that corresponds to a portion of the object that was illuminated by most or all of the emitters, and thus appeared as a bright region in each of the captured images. There also is a region of less intensity **354** outside the bright central region **356.** Although shown as a single lower intensity, it should be understood that variations in intensity can occur within, and between, image portions in accordance with the various embodiments. The region of lower intensity corresponds to one or more portions of the object that were illuminated by less than all of the emitters, or at least one emitter. The fewer images a region appeared in, the less intense that area may appear in the resulting combined image **352.** These differences in intensity can provide some spatial information as to the shape and/or orientation of the object that was not available in any of the individual images. For example, from **FIG. 3(f)** it can be determined that the object might be an elongated object such as a finger, with the bright region **356** corresponding substantially to the fingertip. From the shape of the lower intensity region **354,** it can be determined that the finger is likely coming from the lower right of the screen (in the figure). In at least some embodiments, the relative shape of the lower intensity region to the region of brighter intensity also can be used to estimate an angle of the finger, as a finger positioned orthogonal to the screen will tend to be round in the image and a finger positioned substantially parallel to the screen will have a very elongated shape in the image, with differences in angle there between having differences in the amount of relative elongation with respect to the bright central region. Thus, the combined image **352** can be used to determine not only where the fingertip is located, but can help to estimate where the finger is pointing based on the apparent shape of the object in the combined image.

Further, the size of the bright central region **356** and/or less intense outer region **354** in the image can be used to estimate a distance of the object, as objects closer to the detectors will appear larger in the combined image. By knowing the approximate diameter (or other measure) of a fingertip of the user, for example, the device can estimate the distance to the fingertip based on the apparent size in the image. The distance to the object can be used with the angle information obtained from the combined image to more accurately estimate where the object is pointing, in order to more accurately accept input to the device. Various other type of information can be determined and/or utilized as well within the scope of the various embodiments. Further, if at least a portion of the hand or finger is visible in the field of view of at least one of the conventional, higher resolution cameras, the position information from the conventional camera view can be used with the information from the low resolution, large format camera array to more accurately determine the approximate location of the fingertip and orientation of the finger, or other such object.

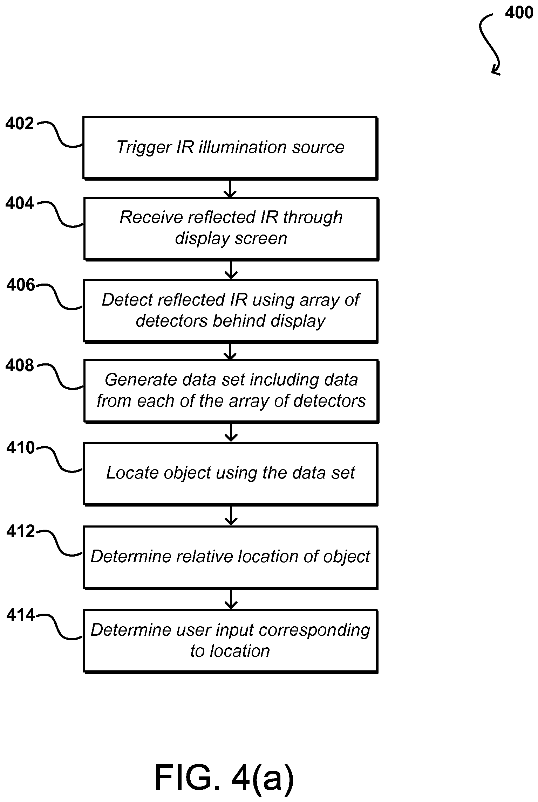

**FIG. 4(a)** illustrates an example process **400** that can be utilized in accordance with various embodiments. It should be understood, however, that there can be additional, fewer, or alternative steps performed in similar or alternative orders, or in parallel, within the scope of the various embodiments unless otherwise stated. In this example, an infrared illumination source is triggered **402,** or otherwise activated, on a computing device. As discussed, the source can be located on a circuit or substrate in common with an array of detectors, and can be configured to direct light through a display screen of the computing device. Infrared light reflected from a nearby object can be received **404** back through the display screen and detected **406** using at least a portion of the array of detectors. As mentioned, each detector can be a photodiode or other single-pixel or single value-detector, producing at least a single intensity value at the respective position. A data set (or image in some embodiments) can be generated **408** using the intensity values of the detectors and the relative positions of the detectors. The data set can be analyzed to locate **410** an object, such as by locating a region of relatively high intensity, pixel, or color values. The relative location of the object to the device can be determined **412** based at least in part upon the location of the high intensity region as determined by the data set. User input corresponding to the location can be determined **414** and provided to an appropriate location, such as an application executing on the device.

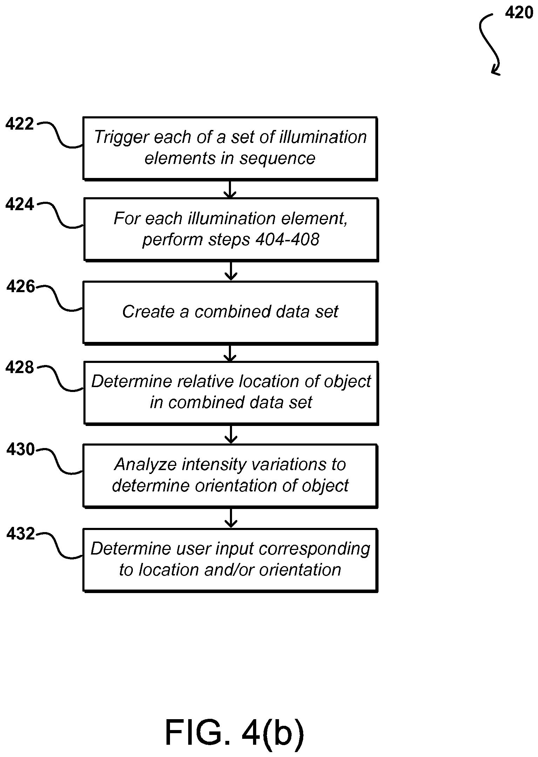

**FIG. 4(b)** illustrates an additional portion **420** of such a process that can be utilized when multiple illumination sources are present on the computing device. In this example portion, each of the illumination sources to be used for the object location determination is triggered **422** in sequence. As mentioned, this can include illumination from each of four corners or sides of the display region, among other such options. An illumination source can include a single emitter or group of emitters. For each illumination element triggered in the sequence, steps such as steps **404-408** can be performed to generate a respective data set using light captured by the plurality of detectors. A combined data set then can be created **426** using the individual data sets generated for each illumination in the sequence. As discussed, the combined data set will include regions with different intensity based at least in part upon the number of images in which light reflected from that object was captured by the same detectors. The relative location of the object can be determined **428** by locating a region of highest intensity in the combined data set, as discussed with respect to step **412.** Using the combined data set, however, the intensity variations can also be analyzed **430** in order to determine an approximate orientation of the object. User input to be provided then can be determined **432** using not only the determined location of the object, but also the orientation. As discussed, distance estimates can also be made in at least some embodiments to assist with the input determinations.

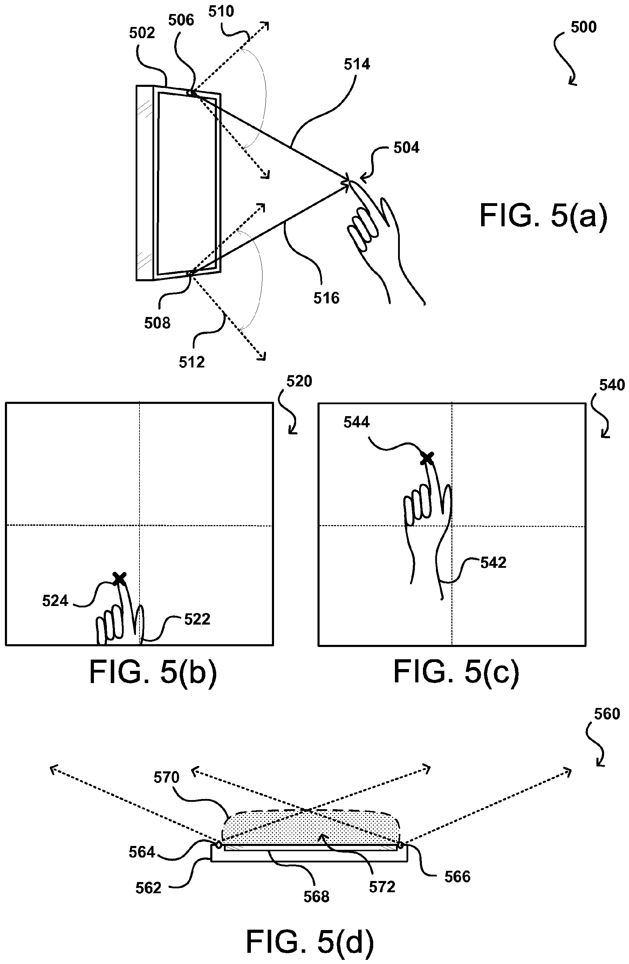

As mentioned, the information from the camera array can be used to supplement the information obtained from conventional cameras, or at least higher resolution cameras, elsewhere on the device, such as to compensate for the dead zone between fields of view of those cameras. **FIGS. 5(a), (b), (c),** and **(d)** illustrate one example approach to determining a relative distance and/or location of at least one feature of a user that can be utilized in accordance with various embodiments. In this example, input can be provided to a computing device **502** by monitoring the position of the user's fingertip **504** with respect to the device, although various other features can be used as well as discussed and suggested elsewhere herein. In some embodiments, a single camera can be used to capture image information including the user's fingertip, where the relative location can be determined in two dimensions from the position of the fingertip in the image and the distance determined by the relative size of the fingertip in the image. In other embodiments, a distance detector or other such sensor can be used to provide the distance information. The illustrated computing device **502** in this example instead includes at least two different image capture elements **506, 508** positioned on the device with a sufficient separation such that the device can utilize stereoscopic imaging (or another such approach) to determine a relative position of one or more features with respect to the device in three dimensions. Although two cameras are illustrated near a top and bottom of the device in this example, it should be understood that there can be additional or alternative imaging elements of the same or a different type at various other locations on the device within the scope of the various embodiments. Further, it should be understood that terms such as "top" and "upper" are used for clarity of explanation and are not intended to require specific orientations unless otherwise stated. In this example, the upper camera **506** is able to see the fingertip **504** of the user as long as that feature is within a field of view **510** of the upper camera **506** and there are no obstructions between the upper camera and those features. If software executing on the computing device (or otherwise in communication with the computing device) is able to determine information such as the angular field of view of the camera, the zoom level at which the information is currently being captured, and any other such relevant information, the software can determine an approximate direction **514** of the fingertip with respect to the upper camera. In some embodiments, methods such as ultrasonic detection, feature size analysis, luminance analysis through active illumination, or other such distance measurement approaches can be used to assist with position determination as well.

In this example, a second camera is used to assist with location determination as well as to enable distance determinations through stereoscopic imaging. The lower camera **508** in **FIG. 5(a)** is also able to image the fingertip **504** as long as the feature is at least partially within the field of view **512** of the lower camera **508.** Using a similar process to that described above, appropriate software can analyze the image information captured by the lower camera to determine an approximate direction **516** to the user's fingertip. The direction can be determined, in at least some embodiments, by looking at a distance from a center (or other) point of the image and comparing that to the angular measure of the field of view of the camera. For example, a feature in the middle of a captured image is likely directly in front of the respective capture element. If the feature is at the very edge of the image, then the feature is likely at a forty-five degree angle from a vector orthogonal to the image plane of the capture element. Positions between the edge and the center correspond to intermediate angles as would be apparent to one of ordinary skill in the art, and as known in the art for stereoscopic imaging. Once the direction vectors from at least two image capture elements are determined for a given feature, the intersection point of those vectors can be determined, which corresponds to the approximate relative position in three dimensions of the respective feature.

In some embodiments, information from a single camera can be used to determine the relative distance to a feature of a user. For example, a device can determine the size of a feature (e.g., a finger, hand, pen, or stylus) used to provide input to the device. By monitoring the relative size in the captured image information, the device can estimate the relative distance to the feature. This estimated distance can be used to assist with location determination using a single camera or sensor approach.

Further illustrating such an example approach, **FIGS. 5(b)** and **5(c)** illustrate example images **520, 540** that could be captured of the fingertip using the cameras **506, 508** of **FIG. 5(a)****.** In this example, **FIG. 5(b)** illustrates an example image **520** that could be captured using the upper camera **506** in **FIG. 5(a)**. One or more image analysis algorithms can be used to analyze the image to perform pattern recognition, shape recognition, or another such process to identify a feature of interest, such as the user's fingertip, thumb, hand, or other such feature. Approaches to identifying a feature in an image, such may include feature detection, facial feature extraction, feature recognition, stereo vision sensing, character recognition, attribute estimation, or radial basis function (RBF) analysis approaches, are well known in the art and will not be discussed herein in detail. Upon identifying the feature, here the user's hand **522,** at least one point of interest **524,** here the tip of the user's index finger, is determined. As discussed above, the software can use the location of this point with information about the camera to determine a relative direction to the fingertip. A similar approach can be used with the image **540** captured by the lower camera **508** as illustrated in **FIG. 5(c)****,** where the hand **542** is located and a direction to the corresponding point **544** determined. As illustrated in **FIGS. 5(b)** and **5(c)****,** there can be offsets in the relative positions of the features due at least in part to the separation of the cameras. Further, there can be offsets due to the physical locations in three dimensions of the features of interest. By looking for the intersection of the direction vectors to determine the position of the fingertip in three dimensions, a corresponding input can be determined within a determined level of accuracy. If higher accuracy is needed, higher resolution and/or additional elements can be used in various embodiments. Further, any other stereoscopic or similar approach for determining relative positions in three dimensions can be used as well within the scope of the various embodiments.

As can be seen in **FIG. 5(a)****,** however, there can be a region near the surface of the screen that falls outside the fields of view of the cameras on the device, which creates a "dead zone" where the location of a fingertip or other feature cannot be determined (at least accurately or quickly) using images captured by the cameras of the device.

**FIG. 5(d)** illustrates an example configuration **560** wherein the device **562** includes a pair of front-facing cameras **564, 566** each capable of capturing images over a respective field of view. If a fingertip or other feature near a display screen **568** of the device falls within at least one of these fields of view, the device can analyze images or video captured by these cameras to determine the location of the fingertip. In order to account for position in the dead zone outside the fields of view near the display, the device can utilize a camera array positioned behind the display screen, as discussed herein, which can detect position at or near the surface of the display screen. Due to the nature of the detectors not having lenses, the ability to resolve any detail is limited. As discussed, however, the useful range **570** of the camera array can cover at least a portion of the dead zone, and in at least some embodiments will also at least partially overlaps the fields of view. Such an approach enables the location of a fingertip or feature to be detected when that fingertip is within a given distance of the display screen, whether or not the fingertip can be seen by one of the conventional cameras. Such an approach also enables a finger or other object to be tracked as the object passes in and out of the dead zone. Other location detection approaches can be used as well, such as ultrasonic detection, distance detection, optical analysis, and the like.

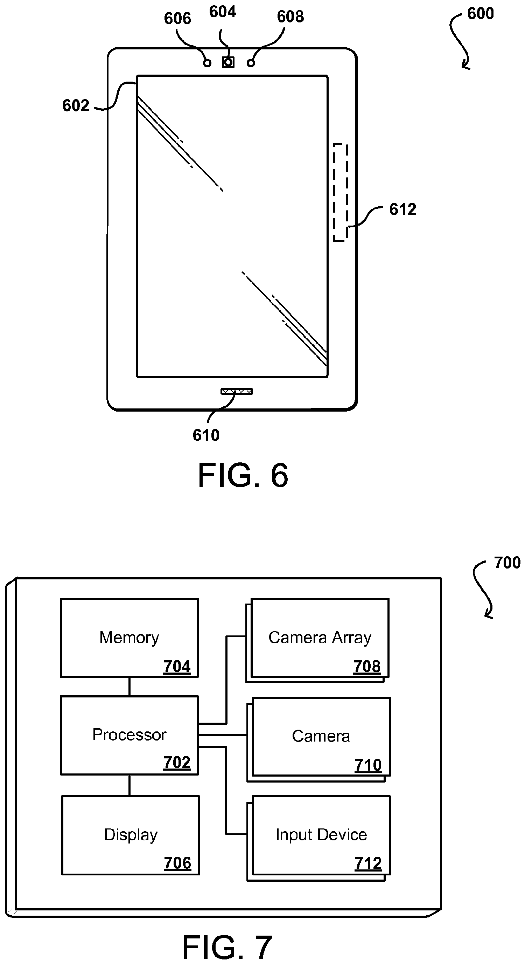

**FIG. 6** illustrates an example electronic user device **600** that can be used in accordance with various embodiments. Although a portable computing device (*e.g*., an electronic book reader or tablet computer) is shown, it should be understood that any electronic device capable of receiving, determining, and/or processing input can be used in accordance with various embodiments discussed herein, where the devices can include, for example, desktop computers, notebook computers, personal data assistants, smart phones, video gaming consoles, television set top boxes, and portable media players. In this example, the computing device **600** has a display screen **602** on the front side, which under normal operation will display information to a user facing the display screen (e.g., on the same side of the computing device as the display screen). The computing device in this example includes at least one conventional camera **604** or other imaging element for capturing still or video image information over at least a field of view of the at least one camera. In some embodiments, the computing device might only contain one imaging element, and in other embodiments the computing device might contain several imaging elements. Each image capture element may be, for example, a camera, a charge-coupled device (CCD), a motion detection sensor, or an infrared sensor, among many other possibilities. If there are multiple image capture elements on the computing device, the image capture elements may be of different types. In some embodiments, at least one imaging element can include at least one wide-angle optical element, such as a fish-eye lens, that enables the camera to capture images over a wide range of angles, such as 180 degrees or more. Further, each image capture element can comprise a digital still camera, configured to capture subsequent frames in rapid succession, or a video camera able to capture streaming video. The device can also include other components to assist with image capture, such as at least one light sensor **606** for determining an amount of ambient light around the device and at least one illumination element **608,** such as a white light or colored LED, for providing a source of illumination that can be timed for image capture.

The example computing device **600** also includes at least one microphone **606** or other audio capture device capable of capturing audio data, such as words or commands spoken by a user of the device, music playing near the device, etc. In this example, a microphone is placed on the same side of the device as the display screen, such that the microphone will typically be better able to capture words spoken by a user of the device. The example computing device **600** also includes at least one communications or networking component **612** that can enable the device to communicate wired or wirelessly across at least one network, such as the Internet, a cellular network, a local area network, and the like. In some embodiments, at least a portion of the image processing, analysis, and/or combination can be performed on a server or other component remote from the computing device.

**FIG.** 7 illustrates a logical arrangement of a set of general components of an example computing device **700** such as the device **600** described with respect to **FIG. 6****.** In this example, the device includes a processor **702** for executing instructions that can be stored in a memory device or element **704.** As would be apparent to one of ordinary skill in the art, the device can include many types of memory, data storage, or non-transitory computer-readable storage media, such as a first data storage for program instructions for execution by the processor **702,** a separate storage for images or data, a removable memory for sharing information with other devices, etc. The device typically will include some type of display element **706,** such as a touch screen or liquid crystal display (LCD), although devices such as portable media players might convey information via other means, such as through audio speakers. As discussed, the device in many embodiments will include at least one conventional image capture element **710** such as a camera or infrared sensor that is able to capture images of objects in the vicinity of the device. The device can also include at least one camera array **708** as discussed herein, which can include a plurality of detectors and emitters in various embodiments. Methods for capturing images or video using a camera element with a computing device are well known in the art and will not be discussed herein in detail. It should be understood that image capture can be performed using a single image, multiple images, periodic imaging, continuous image capturing, image streaming, etc. Further, a device can include the ability to start and/or stop image capture, such as when receiving a command from a user, application, or other device. The example device can include at least one mono or stereo microphone or microphone array, operable to capture audio information from at least one primary direction. A microphone can be a uni-or omni-directional microphone as known for such devices.

In some embodiments, the computing device **700** of **FIG. 7** can include one or more communication components, such as a Wi-Fi, Bluetooth, RF, wired, or wireless communication system. The device in many embodiments can communicate with a network, such as the Internet, and may be able to communicate with other such devices. In some embodiments the device can include at least one additional input element **712** able to receive conventional input from a user. This conventional input can include, for example, a push button, touch pad, touch screen, wheel, joystick, keyboard, mouse, keypad, or any other such device or element whereby a user can input a command to the device. In some embodiments, however, such a device might not include any buttons at all, and might be controlled only through a combination of visual and audio commands, such that a user can control the device without having to be in contact with the device.

The device also can include at least one orientation or motion sensor. As discussed, such a sensor can include an accelerometer or gyroscope operable to detect an orientation and/or change in orientation, or an electronic or digital compass, which can indicate a direction in which the device is determined to be facing. The mechanism(s) also (or alternatively) can include or comprise a global positioning system (GPS) or similar positioning element operable to determine relative coordinates for a position of the computing device, as well as information about relatively large movements of the device. The device can include other elements as well, such as may enable location determinations through triangulation or another such approach. These mechanisms can communicate with the processor, whereby the device can perform any of a number of actions described or suggested herein.

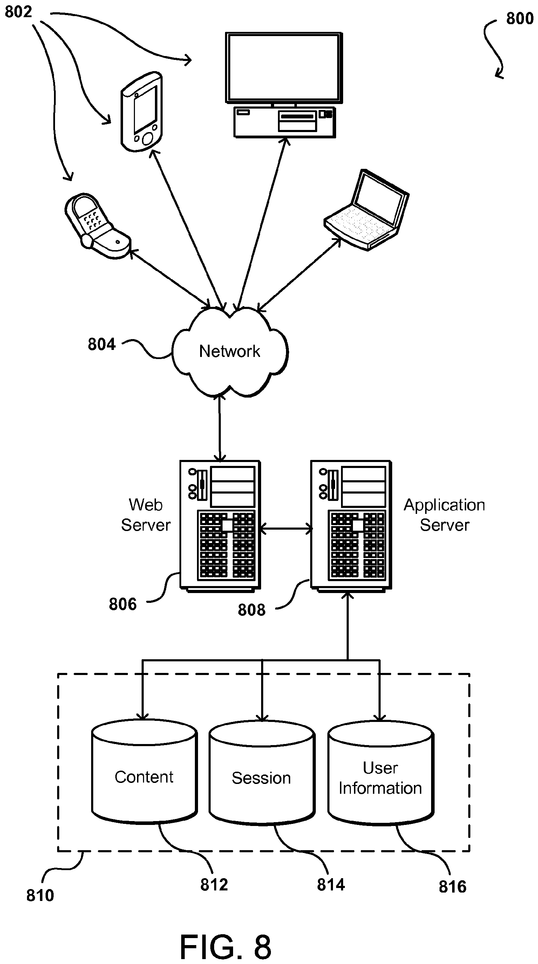

As discussed, different approaches can be implemented in various environments in accordance with the described embodiments. For example, **FIG. 8** illustrates an example of an environment **800** for implementing aspects in accordance with various embodiments. As will be appreciated, although a Web-based environment is used for purposes of explanation, different environments may be used, as appropriate, to implement various embodiments. The system includes an electronic client device **802,** which can include any appropriate device operable to send and receive requests, messages or information over an appropriate network **804** and convey information back to a user of the device. Examples of such client devices include personal computers, cell phones, handheld messaging devices, laptop computers, set-top boxes, personal data assistants, electronic book readers and the like. The network can include any appropriate network, including an intranet, the Internet, a cellular network, a local area network or any other such network or combination thereof. Components used for such a system can depend at least in part upon the type of network and/or environment selected. Protocols and components for communicating via such a network are well known and will not be discussed herein in detail. Communication over the network can be enabled via wired or wireless connections and combinations thereof. In this example, the network includes the Internet, as the environment includes a Web server **806** for receiving requests and serving content in response thereto, although for other networks, an alternative device serving a similar purpose could be used, as would be apparent to one of ordinary skill in the art.

The illustrative environment includes at least one application server **808** and a data store **810.** It should be understood that there can be several application servers, layers or other elements, processes or components, which may be chained or otherwise configured, which can interact to perform tasks such as obtaining data from an appropriate data store. As used herein, the term "data store" refers to any device or combination of devices capable of storing, accessing and retrieving data, which may include any combination and number of data servers, databases, data storage devices and data storage media, in any standard, distributed or clustered environment. The application server **808** can include any appropriate hardware and software for integrating with the data store **810** as needed to execute aspects of one or more applications for the client device and handling a majority of the data access and business logic for an application. The application server provides access control services in cooperation with the data store and is able to generate content such as text, graphics, audio and/or video to be transferred to the user, which may be served to the user by the Web server **806** in the form of HTML, XML or another appropriate structured language in this example. The handling of all requests and responses, as well as the delivery of content between the client device **802** and the application server **808,** can be handled by the Web server **806.** It should be understood that the Web and application servers are not required and are merely example components, as structured code discussed herein can be executed on any appropriate device or host machine as discussed elsewhere herein.

The data store **810** can include several separate data tables, databases or other data storage mechanisms and media for storing data relating to a particular aspect. For example, the data store illustrated includes mechanisms for storing content (*e.g.,* production data) **812** and user information **816,** which can be used to serve content for the production side. The data store is also shown to include a mechanism for storing log or session data **814.** It should be understood that there can be many other aspects that may need to be stored in the data store, such as page image information and access rights information, which can be stored in any of the above listed mechanisms as appropriate or in additional mechanisms in the data store **810.** The data store **810** is operable, through logic associated therewith, to receive instructions from the application server **808** and obtain, update or otherwise process data in response thereto. In one example, a user might submit a search request for a certain type of item. In this case, the data store might access the user information to verify the identity of the user and can access the catalog detail information to obtain information about items of that type. The information can then be returned to the user, such as in a results listing on a Web page that the user is able to view via a browser on the user device **802.** Information for a particular item of interest can be viewed in a dedicated page or window of the browser.

Each server typically will include an operating system that provides executable program instructions for the general administration and operation of that server and typically will include computer-readable medium storing instructions that, when executed by a processor of the server, allow the server to perform its intended functions. Suitable implementations for the operating system and general functionality of the servers are known or commercially available and are readily implemented by persons having ordinary skill in the art, particularly in light of the disclosure herein.

The environment in one embodiment is a distributed computing environment utilizing several computer systems and components that are interconnected via communication links, using one or more computer networks or direct connections. However, it will be appreciated by those of ordinary skill in the art that such a system could operate equally well in a system having fewer or a greater number of components than are illustrated in **FIG. 8****.** Thus, the depiction of the system **800** in **FIG. 8** should be taken as being illustrative in nature and not limiting to the scope of the disclosure.

The various embodiments can be further implemented in a wide variety of operating environments, which in some cases can include one or more user computers or computing devices which can be used to operate any of a number of applications. User or client devices can include any of a number of general purpose personal computers, such as desktop or laptop computers running a standard operating system, as well as cellular, wireless and handheld devices running mobile software and capable of supporting a number of networking and messaging protocols. Such a system can also include a number of workstations running any of a variety of commercially-available operating systems and other known applications for purposes such as development and database management. These devices can also include other electronic devices, such as dummy terminals, thin-clients, gaming systems and other devices capable of communicating via a network.

Most embodiments utilize at least one network that would be familiar to those skilled in the art for supporting communications using any of a variety of commercially-available protocols, such as TCP/IP, OSI, FTP, UPnP, NFS, CIFS and AppleTalk. The network can be, for example, a local area network, a wide-area network, a virtual private network, the Internet, an intranet, an extranet, a public switched telephone network, an infrared network, a wireless network and any combination thereof.

In embodiments utilizing a Web server, the Web server can run any of a variety of server or mid-tier applications, including HTTP servers, FTP servers, CGI servers, data servers, Java servers and business application servers. The server(s) may also be capable of executing programs or scripts in response requests from user devices, such as by executing one or more Web applications that may be implemented as one or more scripts or programs written in any programming language, such as Java®, C, C# or C++ or any scripting language, such as Perl, Python or TCL, as well as combinations thereof. The server(s) may also include database servers, including without limitation those commercially available from Oracle®, Microsoft®, Sybase® and IBM®.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network (SAN) familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit (CPU), at least one input device (*e.g.*, a mouse, keyboard, controller, touch-sensitive display element or keypad) and at least one output device (*e.g*., a display device, printer or speaker). Such a system may also include one or more storage devices, such as disk drives, optical storage devices and solid-state storage devices such as random access memory (RAM) or read-only memory (ROM), as well as removable media devices, memory cards, flash cards, etc.

Such devices can also include a computer-readable storage media reader, a communications device (*e.g.,* a modem, a network card (wireless or wired), an infrared communication device) and working memory as described above. The computer-readable storage media reader can be connected with, or configured to receive, a computer-readable storage medium representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs such as a client application or Web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Storage media and computer readable media for containing code, or portions of code, can include any appropriate media known or used in the art, including storage media and communication media, such as but not limited to volatile and non-volatile, removable and non-removable media implemented in any method or technology for storage and/or transmission of information such as computer readable instructions, data structures, program modules or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices or any other medium which can be used to store the desired information and which can be accessed by a system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. It will, however, be evident that various modifications and changes may be made thereunto without departing from the scope of the invention as set forth in the claims.

## Claims

1. A computing device (104), comprising:
a processor;
a display screen (202) for displaying content;
a plurality of illumination sources (216) operable to provide a source of illumination for causing light to be reflected from an object through the display screen;
a detector array including a plurality of detectors (214) each configured to detect light that is reflected by the object and passes through the display screen; and memory including instructions that, when executed by the processor, cause the computing device to:
activate a first subset of the illumination sources to emit light at a first specified time from a first direction;
activate a second subset of the illumination sources to emit light at a second specified time from a second direction, the second specified time being different from the first specified time and the second direction being different from the first direction;
analyze data for the light detected by the detector array to determine a position of the object with respect to the computing device;
collect intensity data captured by the detector array for each of the specified times, the intensity data including intensity data for light emitted by at least one of the plurality of illumination sources and reflected by the object;
generate a combined data set including the intensity data for each of the specified times, the combined data set including at least combined intensity information for each of the detectors in the detector; and
analyze the representation of the object in the combined data set to further determine an orientation of the object with respect to the computing device.

2. The computing device of claim 1, wherein the detectors are photodiodes (214) separated by at least a determined distance on a substrate, the substrate including lines for connecting the photodiodes to circuitry operable to read values detected by each of the photodiodes.

3. The computing device of claim 1, wherein the plurality of illumination sources includes a plurality of infrared light emitting diodes (216) configured to emit infrared radiation through the display screen, the detectors capable of detecting at least a portion of the infrared radiation reflected by the object and passing back through the display screen.

4. The computing device of claim 1, wherein at least one illumination source includes a backlight (204) for the display screen.

5. The computing device of claim 1, further comprising:
an infrared-transmissive element (208) positioned between the display screen and a substrate supporting the at least one illumination source and the detector array, the infrared-transmissive element preventing visible light from being detected by the detector array.

6. The computing device of claim 1, further comprising:
at least one camera (108) positioned on the computing device at a distance from the display screen, the at least one camera configured to capture images capable of being analyzed by the processor to determine at least one of a location or an orientation of the object when the object is within a field of view of the at least one camera, the detector array configured to capture image data capable of being analyzed to determine at least one of the location or the orientation of the object when the object is outside the field of view of the at least one camera.

7. The computing device of claim 1, wherein the instructions when executed further cause the detector array to detect light between successive active periods of the display screen.

8. The computing device of claim 1, wherein the active layer includes a liquid crystal material, and wherein the liquid crystal material is configured to be activated to enable at least a portion of the light incident on the display screen to pass through the display screen.

9. The computing device of claim 1, wherein the instructions when executed further cause the computing device to track the object over time, enabling the computing device to determine at least one of a motion or a gesture performed by the object.

10. The computing device of claim 1, wherein the object includes at least one of a finger or hand of the user, or an object held by the user.

11. The computing device of claim 1, wherein the instructions when executed cause the computing device to form a combined data set such that regions that appear intense in fewer of the respective collected intensity data sets appear less intense in the combined data set.

12. A computer-implemented method, comprising:
causing a first subset of a plurality of emitters (216) to emit light at a first specified time from a first direction , the emitters configured to emit the light through a display screen of a computing device;
causing a second subset of the emitters to emit light at a second specified time from a second direction, the second specified time being different from the first specified time and the second direction being different from the first direction;
analyze data for the light detected by a detector array (214) to determine a position of the object with respect to the computing device;
collect intensity data captured by the detector array (214) for each of the specified times, the intensity data corresponding to light emitted by at least one of the emitters and reflected by an object (106) within at least a detection range of the computing device, the light reflected by the object passing back through the display screen before being detected by the detector array;
generate a combined data set including the intensity data for each of the specified times, the combined data set including at least combined intensity data for each detector in the detector array; and
analyze the representation of the object in the combined data set to further determine an orientation of the object with respect to the computing device.

13. The computer-implemented method of claim 12, wherein the instructions when executed further cause the computing device to track the object over time, enabling the computing device to determine at least one of a motion or a gesture performed by the object.

14. The computer-implemented method of claim 12, wherein the emitters emit infrared light and the detectors of the detector array detect reflected portions of the infrared light emitted by the emitters, and wherein the infrared light is capable of being detected during operation of the display screen.

15. The computer-implemented method of claim 12, wherein the computing device includes at least one camera positioned at a distance from the display screen, the at least one camera configured to capture images capable of being analyzed to determine at least one of a location or an orientation of the object when the object is within a field of view of the at least one camera, the detector array configured to capture image data capable of being analyzed to determine at least one of the location or the orientation of the object when the object is outside the field of view of the at least one camera and within the detection range.

## Patentansprüche

1. Rechenvorrichtung (104), umfassend:
einen Prozessor;
einen Anzeigebildschirm (202) zum Anzeigen von Inhalt;
eine Vielzahl von Lichtquellen (216), die bedienbar sind, um eine Lichtquelle bereitzustellen, um zu verursachen, dass Licht von einem Objekt durch den Anzeigebildschirm reflektiert wird;
eine Detektoranordnung einschließlich einer Vielzahl von Detektoren (214), von denen jeder konfiguriert ist, um Licht zu erfassen, das durch das Objekt reflektiert wird und den Anzeigebildschirm durchläuft; und Speicher einschließlich Anweisungen, die, wenn sie von dem Prozessor ausgeführt werden, die Rechenvorrichtung zu Folgendem zu veranlassen:
Aktivieren einer ersten Untermenge der Lichtquellen, um Licht zu einer ersten spezifizierten Zeit aus einer ersten Richtung zu emittieren;
Aktivieren einer zweiten Untermenge der Lichtquellen, um Licht zu einer zweiten spezifizierten Zeit aus einer zweiten Richtung zu emittieren, wobei sich die zweite spezifizierte Zeit von der ersten spezifizierten Zeit unterscheidet und sich die zweite Richtung von der ersten Richtung unterscheidet;
Analysieren von Daten auf das durch die Detektoranordnung erfasste Licht hin, um eine Position des Objekts im Hinblick auf die Rechenvorrichtung zu bestimmen;
Sammeln von Intensitätsdaten, die durch die Detektoranordnung aufgenommen werden, für jede der spezifizierten Zeiten, wobei die Intensitätsdaten Intensitätsdaten für Licht umfassen, das von mindestens einer der Vielzahl von Lichtquellen emittiert und von dem Objekt reflektiert wird;
Erzeugen eines kombinierten Datensatzes einschließlich der Intensitätsdaten für jede der spezifizierten Zeiten, wobei der kombinierte Datensatz mindestens kombinierte Intensitätsinformationen für jeden der Detektoren in dem Detektor umfasst; und
Analysieren der Darstellung des Objekts in dem kombinierten Datensatz, um eine Ausrichtung des Objekts weiter zu bestimmen im Hinblick auf die Rechenvorrichtung.

2. Rechenvorrichtung nach Anspruch 1, wobei die Detektoren Photodioden (214) sind, die durch mindestens einen festgelegten Abstand auf einem Substrat getrennt sind, wobei das Substrat Leitungen zum Verbinden der Photodioden mit Schaltung umfasst, die betreibbar ist, um von jeder der Photodioden erfasste Werte zu lesen.

3. Rechenvorrichtung nach Anspruch 1, wobei die Vielzahl von Lichtquellen eine Vielzahl von Dioden (216) umfasst, die Infrarotlicht emittieren und konfiguriert sind, um Infrarotstrahlung durch den Anzeigebildschirm zu emittieren, wobei die Detektoren in der Lage sind, mindestens einen Teil der Infrarotstrahlung zu erfassen, die von dem Objekt reflektiert wird und den Anzeigebildschirm zurückdurchläuft.

4. Rechenvorrichtung nach Anspruch 1, wobei mindestens eine Lichtquelle eine Hintergrundbeleuchtung (204) für den Anzeigebildschirm umfasst.

5. Rechenvorrichtung nach Anspruch 1, ferner umfassend:
ein infrarotdurchlässiges Element (208), das zwischen dem Anzeigebildschirm und einem Substrat positioniert ist, das die mindestens eine Lichtquelle und die Detektoranordnung stützt, wobei das infrarotdurchlässige Element sichtbares Licht daran hindert, durch die Detektoranordnung erfasst zu werden.

6. Rechenvorrichtung nach Anspruch 1, ferner umfassend:
mindestens eine Kamera (108), die auf der Rechenvorrichtung in einem Abstand von dem Anzeigebildschirm positioniert ist, wobei die mindestens eine Kamera konfiguriert ist, um Bilder aufzunehmen, die in der Lage sind, von dem Prozessor analysiert zu werden, um mindestens eines von einer Lage oder einer Ausrichtung des Objekts zu bestimmen, wenn sich das Objekt in einem Sichtfeld der mindestens einen Kamera befindet, wobei die Detektoranordnung konfiguriert ist, um Bilddaten aufzunehmen, die in der Lage sind, analysiert zu werden, um mindestens eines der Lage oder der Ausrichtung des Objekts zu bestimmen, wenn sich das Objekt außerhalb des Sichtfelds der mindestens einen Kamera befindet.

7. Rechenvorrichtung nach Anspruch 1, wobei die Anweisungen, wenn sie ausgeführt werden, die Detektoranordnung ferner veranlassen, Licht zwischen aufeinanderfolgenden aktiven Zeiträumen des Anzeigebildschirms zu erfassen.

8. Rechenvorrichtung nach Anspruch 1, wobei die aktive Schicht ein Flüssigkristallmaterial umfasst und wobei das Flüssigkristallmaterial konfiguriert ist, um aktiviert zu werden, um mindestens einen Teil des Lichts, das auf den Anzeigebildschirm einfällt, zu befähigen, den Anzeigebildschirm zu durchlaufen.

9. Rechenvorrichtung nach Anspruch 1, wobei die Anweisungen, wenn sie ausgeführt werden, die Rechenvorrichtung ferner veranlassen, das Objekt über einen Zeitraum zu verfolgen, was die Rechenvorrichtung in die Lage versetzt, mindestens eines von einer Bewegung oder einer Geste, die von dem Objekt ausgeführt wird, zu bestimmen.

10. Rechenvorrichtung nach Anspruch 1, wobei das Objekt mindestens eines von einem Finger oder einer Hand des Benutzers oder ein von dem Benutzer gehaltenes Objekt umfasst.

11. Rechenvorrichtung nach Anspruch 1, wobei die Anweisungen, wenn sie ausgeführt werden, die Rechenvorrichtung veranlassen, einen kombinierten Datensatz so zu bilden, dass Regionen, die in weniger der jeweiligen gesammelten Intensitätsdatensätze intensiv auftreten, in dem kombinierten Datensatz weniger intensiv aufzutreten.

12. Computerimplementiertes Verfahren, umfassend:
Veranlassen einer ersten Untermenge einer Vielzahl von Emittern (216), Licht zu einer ersten spezifizierten Zeit aus einer ersten Richtung zu emittieren, wobei die Emitter konfiguriert sind, um das Licht durch einen Anzeigebildschirm einer Rechenvorrichtung zu emittieren;
Veranlassen einer zweiten Untermenge der Emitter, Licht zu einer zweiten spezifizierten Zeit aus einer zweiten Richtung zu emittieren, wobei sich die zweite spezifizierte Zeit von der ersten spezifizierten Zeit unterscheidet und sich die zweite Richtung von der ersten Richtung unterscheidet;
Analysieren von Daten auf das von der Detektoranordnung (214) erfasste Licht hin, um eine Position des Objekts im Hinblick auf die Rechenvorrichtung zu bestimmen;
Sammeln von Intensitätsdaten, die von der Detektoranordnung (214) aufgenommen werden, für jede der spezifizierten Zeiten, wobei die Intensitätsdaten Licht entsprechen, das von mindestens einem der Emitter emittiert und durch ein Objekt (106) in mindestens einem Erfassungsbereich der Rechenvorrichtung reflektiert wird, wobei das durch das Objekt reflektierte Licht den Anzeigebildschirm durchläuft, bevor es von der Detektoranordnung erfasst wird;
Erzeugen eines kombiniertes Datensatzes einschließlich der Intensitätsdaten für jede der spezifizierten Zeiten, wobei der kombinierte Datensatz mindestens kombinierte Intensitätsdaten für jeden Detektor in der Detektoranordnung umfasst; und
Analysieren der Darstellung des Objekts in dem kombinierten Datensatz, um eine Ausrichtung des Objekts im Hinblick auf die Rechenvorrichtung weiter zu bestimmen.

13. Computerimplementiertes Verfahren nach Anspruch 12, wobei die Anweisungen, wenn sie ausgeführt werden, die Rechenvorrichtung veranlassen, das Objekt über einen Zeitraum zu verfolgen, was die Rechenvorrichtung in die Lage versetzt, mindestens eines von einer Bewegung oder einer Geste, die von dem Objekt ausgeführt wird, zu bestimmen.

14. Computerimplementiertes Verfahren nach Anspruch 12, wobei die Emitter Infrarotlicht emittieren und die Detektoren der Detektoranordnung reflektierte Anteile des Infrarotlichts, das von den Emittern emittiert wird, erfassen und wobei das Infrarotlicht in der Lage ist, während einer Bedienung des Anzeigebildschirms erfasst zu werden.

15. Computerimplementiertes Verfahren nach Anspruch 12, wobei die Rechenvorrichtung mindestens eine Kamera umfasst, die in einem Abstand von dem Anzeigebildschirm positioniert ist, wobei die mindestens eine Kamera konfiguriert ist, um Bilder aufzunehmen, die in der Lage sind, analysiert zu werden, um mindestens eines von einer Lage oder einer Ausrichtung des Objekts zu bestimmen, wenn sich das Objekt in einem Sichtfeld der mindestens einen Kamera befindet, wobei die Detektoranordnung konfiguriert ist, um Bilddaten aufzunehmen, die in der Lage sind, analysiert zu werden, um mindestens eines von der Lage oder der Ausrichtung des Objekts zu bestimmen, wenn sich das Objekt außerhalb des Sichtfelds der mindestens einen Kamera und in dem Erfassungsbereich befindet.

## Revendications

1. Dispositif informatique (104), comprenant :
un processeur ;
un écran d'affichage (202) pour afficher un contenu ;
une pluralité de sources d'éclairage (216) utilisables pour fournir une source d'éclairage pour faire en sorte que de la lumière soit réfléchie à partir d'un objet à travers l'écran d'affichage ;
un réseau de détecteurs incluant une pluralité de détecteurs (214), chacun configuré pour détecter de la lumière qui est réfléchie par l'objet et passe à travers l'écran d'affichage ; et une mémoire incluant des instructions qui, lorsqu'elles sont exécutées par le processeur, font en sorte que le dispositif informatique :
active un premier sous-ensemble des sources d'éclairage pour émettre de la lumière, à un premier instant spécifié, à partir d'une première direction ;
active un second sous-ensemble des sources d'éclairage pour émettre de la lumière, à un second instant spécifié, à partir d'une seconde direction, le second instant spécifié étant différent du premier instant spécifié et la seconde direction étant différente de la première direction ;
analyse des données pour la lumière détectée par le réseau de détecteurs pour déterminer une position de l'objet par rapport au dispositif informatique ;
collecte des données d'intensité capturées par le réseau de détecteurs pour chacun des instants spécifiés, les données d'intensité incluant des données d'intensité pour de la lumière émise par au moins une de la pluralité de sources d'éclairage et réfléchie par l'objet ;
génère un ensemble de données combinées incluant les données d'intensité pour chacun des instants spécifiés, l'ensemble de données combinées incluant au moins des informations d'intensité combinées pour chacun des détecteurs dans le détecteur ; et
analyse la représentation de l'objet dans l'ensemble de données combinées pour déterminer en outre une orientation de l'objet par rapport au dispositif informatique.

2. Dispositif informatique selon la revendication 1, dans lequel les détecteurs sont des photodiodes (214) séparées par au moins une distance déterminée sur un substrat, le substrat incluant des lignes pour connecter les photodiodes à une circuiterie utilisable pour lire des valeurs détectées par chacune des photodiodes.

3. Dispositif informatique selon la revendication 1, dans lequel la pluralité de sources d'éclairage inclut une pluralité de diodes électroluminescentes infrarouges (216) configurées pour émettre un rayonnement infrarouge à travers l'écran d'affichage, les détecteurs étant capables de détecter au moins une portion du rayonnement infrarouge réfléchi par l'objet et repassant à travers l'écran d'affichage.

4. Dispositif informatique selon la revendication 1, dans lequel au moins une source d'éclairage inclut un rétro-éclairage (204) pour l'écran d'affichage.

5. Dispositif informatique selon la revendication 1, comprenant en outre :
un élément de transmission infrarouge (208) positionné entre l'écran d'affichage et un substrat supportant l'au moins une source d'éclairage et le réseau de détecteurs, l'élément de transmission infrarouge empêchant de la lumière visible d'être détectée par le réseau de détecteurs.

6. Dispositif informatique selon la revendication 1, comprenant en outre :
au moins une caméra (108) positionnée sur le dispositif informatique à une distance de l'écran d'affichage, l'au moins un caméra étant configurée pour capturer des images capable d'être analysées par le processeur pour déterminer au moins un d'un emplacement ou d'une orientation de l'objet lorsque l'objet est à l'intérieur d'un champ de vue de l'au moins une caméra, le réseau de détecteurs étant configuré pour capturer des données d'image capables d'être analysées pour déterminer au moins un de l'emplacement ou de l'orientation de l'objet lorsque l'objet est à l'extérieur du champ de vue de l'au moins un caméra.

7. Dispositif informatique selon la revendication 1, dans lequel les instructions, lorsqu'elles sont exécutées, font en outre en sorte que le réseau de détecteurs détecte de la lumière entre des périodes actives successives de l'écran d'affichage.

8. Dispositif informatique selon la revendication 1, dans lequel la couche active inclut un matériau à cristaux liquides, et dans lequel le matériau à cristaux liquides est configuré pour être activé pour permettre à au moins une portion de la lumière incidente sur l'écran d'affichage de passer à travers l'écran d'affichage.

9. Dispositif informatique selon la revendication 1, dans lequel les instructions, lorsqu'elles sont exécutées, font en outre en sorte que le dispositif informatique suive l'objet au fil du temps, permettant au dispositif informatique de déterminer au moins un d'un mouvement ou d'un geste réalisé par l'objet.

10. Dispositif informatique selon la revendication 1, dans lequel l'objet inclut au moins un d'un doigt ou d'une main de l'utilisateur, ou un objet tenu par l'utilisateur.

11. Dispositif informatique selon la revendication 1, dans lequel les instructions, lorsqu'elles sont exécutées, font en sorte que le dispositif informatique forme un ensemble de données combinées de telle sorte que des régions qui semblent intenses dans moins des ensembles respectifs de données d'intensité collectées semblent moins intenses dans l'ensemble de données combinées.

12. Procédé implémenté par ordinateur, comprenant :
faire en sorte qu'un premier sous-ensemble d'une pluralité d'émetteurs (216) émette de la lumière, à un premier instant spécifié, à partir d'une première direction, les émetteurs étant configurés pour émettre la lumière à travers un écran d'affichage d'un dispositif informatique ;
faire en sorte qu'un second sous-ensemble des émetteurs émette de la lumière, à un second instant spécifié, à partir d'une seconde direction, le second instant spécifié étant différent du premier instant spécifié et la seconde direction étant différente de la première direction ;
analyser des données pour la lumière détectée par un réseau de détecteurs (214) pour déterminer une position de l'objet par rapport au dispositif informatique ;
collecter des données d'intensité capturées par le réseau de détecteurs (214) pour chacun des instants spécifiés, les données d'intensité correspondant à de la lumière émise par au moins un des émetteurs et réfléchie par un objet (106) au sein d'une portée de détection du dispositif informatique, la lumière réfléchie par l'objet repassant à travers l'écran d'affichage avant d'être détectée par le réseau de détecteurs ;
générer un ensemble de données combinées incluant les données d'intensité pour chacun des instants spécifiés, l'ensemble de données combinées incluant au moins des données d'intensité combinées pour chaque détecteur dans le réseau de détecteurs ; et
analyser la représentation de l'objet dans l'ensemble de données combinées pour déterminer en outre une orientation de l'objet par rapport au dispositif informatique.

13. Procédé implémenté par ordinateur selon la revendication 12, dans lequel les instructions, lorsqu'elles sont exécutées, font en outre en sorte que le dispositif informatique suive l'objet au fil du temps, permettant au dispositif informatique de déterminer au moins un d'un mouvement ou d'un geste réalisé par l'objet.

14. Procédé implémenté par ordinateur selon la revendication 12, dans lequel les émetteurs émettent de la lumière infrarouge et les détecteurs du réseau de détecteurs détectent des portions réfléchies de la lumière infrarouge émise par les émetteurs, et dans lequel la lumière infrarouge est capable d'être détectée durant le fonctionnement de l'écran d'affichage.

15. Procédé implémenté par ordinateur selon la revendication 12, dans lequel le dispositif informatique inclut au moins une caméra positionnée à une distance de l'écran d'affichage, l'au moins un caméra étant configurée pour capturer des images capables d'être analysées pour déterminer au moins un d'un emplacement ou d'une orientation de l'objet lorsque l'objet est à l'intérieur d'un champ de vue de l'au moins une caméra, le réseau de détecteurs étant configuré pour capturer des données d'image capables d'être analysées pour déterminer au moins un de l'emplacement ou de l'orientation de l'objet lorsque l'objet est à l'extérieur du champ de vue de l'au moins une caméra et au sein d'une portée de détection.
